(19) Europäisches Patentamt
European Patent Office
Office européen des brevets

(11) EP 0 630 763 B1

(12) EUROPÄISCHE PATENTSCHRIFT

(45) Veröffentlichungstag und Bekanntmachung des Hinweises auf die Patenterteilung:
15.09.1999 Patentblatt 1999/37

(51) Int. Cl.$^6$: B44C 1/17, B44C 5/04

(21) Anmeldenummer: 94108606.8

(22) Anmeldetag: 06.06.1994

(54) **Verfahren zum Herstellen von lackierten Teilen**

Process for preparing painted parts

Procédé pour la préparation de parties laquées

(84) Benannte Vertragsstaaten:
**DE ES FR GB IT**

(30) Priorität: **14.06.1993 DE 4319519**

(43) Veröffentlichungstag der Anmeldung:
**28.12.1994 Patentblatt 1994/52**

(73) Patentinhaber:
• **MAGNA EXTERIOR SYSTEMS GmbH**
  **63179 Obertshausen (DE)**
• **Knop, Helmut, Dipl.-Ing.**
  **D-74858 Aglasterhausen (DE)**

(72) Erfinder:
• **Knop, Helmut, Dipl.-Ing.**
  **D-74858 Aglasterhausen (DE)**

• **Palige, Dieter, Dipl.-Ing.**
  **D-63773 Goldbach (DE)**
• **Zielinski, Wolfgang, Dipl.-Ing.**
  **D-63110 Rodgau 6 (DE)**

(74) Vertreter: **Pfiz, Thomas et al**
**Patentanwälte Wolf & Lutz**
**Hauptmannsreute 93**
**70193 Stuttgart (DE)**

(56) Entgegenhaltungen:
| | |
|---|---|
| EP-A- 0 251 546 | EP-A- 0 266 107 |
| EP-A- 0 285 071 | WO-A-94/13496 |
| DE-A- 1 816 987 | GB-A- 1 192 477 |
| US-A- 4 916 008 | US-A- 5 139 830 |

**Beschreibung**

Die Erfindung betrifft ein Verfahren zum Herstellen von insbesondere aus Kunststoff bestehenden oder Kunststoff enthaltenden Teilen mit farblich unterschiedlich lackierten Flächen, wobei eine Tragfolie als Träger für mindestens eine auf einem Haftvermittler angeordnete Lackschicht verwendet und zusammen mit der Lackschicht auf dem zu lackierenden Teil angeordnet wird.

Es ist bekannt, insbesondere aus Kunststoff bestehende oder Kunststoff enthaltende Teile mit gegebenenfalls mehrfarbig lackierten Flächen in der Weise zu fertigen, daß das jeweilige Teil ganz oder teilweise spritzlackiert wird, wobei in anderer Farbe zu lackierende Flächen des Teiles abgedeckt werden. Derartige Lackierungen, die insbesondere in Verbindung mit Kraftfahrzeugteilen angewandt werden, sind aufwendig und teuer.

Zur Vermeidung dieses Nachteils ist es bereits bekannt (EP-A 0285071, EP-A 0266107, WO-A 94/713496, EP-A 0251546), eine Tragfolie als Träger für mindestens eine Lackschicht zu verwenden, die zusammen mit der Lackschicht auf dem zu lackierenden Teil angeordnet wird.

Ausgehend hiervon liegt der Erfindung die Aufgabe zugrunde, Maßnahmen zu treffen, mit deren Hilfe es mit einfachen Mitteln möglich ist, Teile mit einfarbig oder mit mehrfarbig lackierten Flächen herzustellen, wobei dies ferner mit einem möglichst geringen Arbeits- und Kostenaufwand verbunden sein soll.

Gelöst wird diese Aufgabe mit den Merkmalen der Patentansprüche 1 und 12. Vorteilhafte Ausgestaltungen und Weiterbildungen der Erfindung ergeben sich aus den abhängigen Ansprüchen.

Die erfindungsgemäße Lösung sieht vor, daß als Tragfolie eine biaxial gestreckte Polyesterfolie, eine Aluminiumfolie oder eine aluminiumbedampfte Polyesterfolie verwendet wird.

Der zu lackierende Gegenstand wird mit den erfindungsgemäßen Maßnahmen nicht mehr unmittelbar lackiert, sondern mittelbar unter Verwendung einer Lackfolie, wobei der zum Gestalten der lackierten Fläche dienende Lack zunächst auf eine Tragfolie aufgebracht und diese sodann auf dem zu lackierenden Teil befestigt wird. Dies kann ferner dadurch geschehen, daß die Tragfolie mit ihrer Lackschicht unmittelbar auf dem zu lackierenden Teil angeordnet wird oder daß die Tragfolie mit der Lackschicht auf einem weiteren, zweiten Träger angeordnet und zusammen mit diesem weiteren Träger dann auf dem zu lackierenden Teil befestigt wird. Vor allem bei der Herstellung von mehrfarbigen Zierleisten, Stoßfängern oder Rammschutzleisten, die eine Grundfarbe bzw. Grundlackierung und zusätzlich andersfarbige Zierstreifen aufweisen, ist eine Lackierung unter Verwendung von mindestens einem Träger für die Lackschicht des farblich abgesetzten Zierstreifens zweckmäßig.

Die Herstellung des Zierstreifens mit Hilfe einer Lackfolie ist einfach. Außerdem ist die Befestigung des zusätzlichen Zierstreifens an der Zierleiste, an der Rammschutzleiste oder an einem Stoßfänger einfach zu bewerkstelligen. Dies gilt insbesondere dann, wenn die Lackfolie kurzzeitig bis zu einer Temperatur von 200 °C farbbeständig und auch gegen hohe Drücke beständig ist, wobei in Verbindung mit Kraftfahrzeugaußenteilen die notwendige Farbtonvielfalt entsprechend den üblichen Serienlackierungen, ferner Witterungsbeständigkeit und spezielle Metallicfarbtoneffekte erzielbar sind. Erreicht wird dies mit Hilfe weiterer Merkmale, die Gegenstände von Unteransprüchen sind und aus der nachfolgenden Beschreibung in Verbindung mit der Zeichnung hervorgehen.

Die Erfindung wird nachstehend anhand von Ausführungsbeispielen, die in der Zeichnung dargestellt sind, näher beschrieben. Dabei zeigen:

Fig. 1    schematisch im Schnitt den Aufbau einer für eine Lackfolie verwendbaren Tragfolie;

Fig. 2    schematisch im Schnitt den Aufbau einer Lackfolie mit einer Lackschicht;

Fig. 3    schematisch im Schnitt den Aufbau einer Lackfolie mit zwei Lackschichten oder mit Metallic- und mit Klarlack;

Fig. 4    schematisch eine Darstellung von wesentlichen Teilen einer Vorrichtung zum Herstellen einer Lackfolie jeweils mit einer Einrichtung zum Trocknen und zum Aufwickeln der Lackfolie;

Fig. 5    schematisch eine abgewandelte Vorrichtung zum Herstellen der Lackfolie jeweils mit der Einrichtung zum Trocknen und zum Aufwickeln der Lackfolie;

Fig. 6    eine perspektivische Darstellung einer hinteren Rammschutzleiste für ein Kraftfahrzeug mit einer andersfarbig lackierten Zierleiste;

Fig. 7    einen Schnitt längs der Linie VII - VII in Fig. 6 in größerem Maßstab;

Fig. 8    eine Ansicht eines Teiles einer zweifarbigen Kotflügel-Zierleiste;

Fig. 9 einen Schnitt längs der Linie IX - IX in Fig. 8 und

Fig. 10 eine abgebrochene, perspektivische Darstellung eines z.B. aus Kunststoff bestehenden oder Kunststoff enthaltenden Teiles mit einem farblich abgesetzten, aus einer Lackfolie bestehenden Zierstreifen.

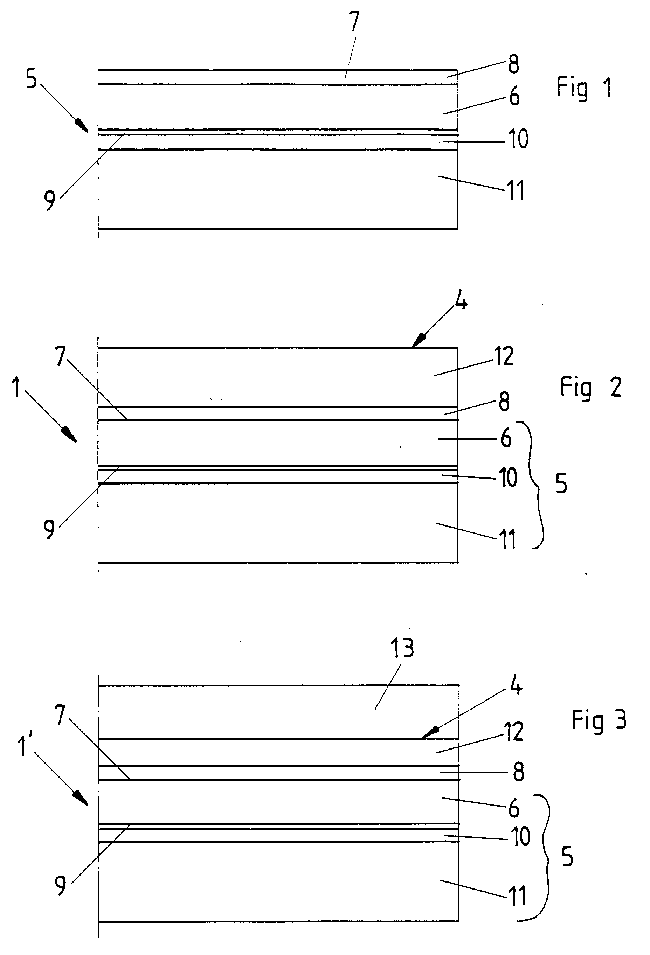

Die Verwendung einer Lackfolie 1 zum Herstellen von lackierten Flächen 2 auf beliebigen Teilen 3 setzt zunächst eine als Träger für den Lack 4 dienende Tragfolie 5 voraus. Ehe der Lack 4 auf die Tragfolie 5 aufgetragen wird und dann zusammen mit dieser eine Lackfolie 1 bildet, wird die Tragfolie 5 in geeigneter Weise vorbereitet wie dies anhand der schematischen Darstellung in Fig. 1 bezüglich des aus mehreren Lagen und Schichten bestehenden Aufbaus der Tragfolie 5 hervorgeht. Dabei versteht es sich ferner, daß die besondere Darstellung in Fig. 1 nur eine bevorzugte Ausführungsform der Erfindung wiedergibt.

Als Ausgangswerkstoff für die Tragfolie 5 dient z.B. eine Polyesterfolie 6, die biaxial (in Laufrichtung und quer dazu) gereckt wird. Die Tragfolie kann aber auch aus Aluminium bestehen oder eine aluminiumbedampfte Polyesterfolie sein.

Auf der zu lackierenden Seite 7 der Tragfolie 5 wird ferner ein Haftvermittler 8 (ein Mittel, das nicht selbst klebend ist, aber die Haftung des Lackes 4 auf Tragfolie 5 verbessert) angeordnet. Verwendet wird vorzugsweise ein Haftvermittler 8 auf Acrylatbasis (Acryl-Polymer) mit einer Schichtdicke von 0,2 - 5 $\mu$m. Die bevorzugte Schichtdicke beträgt 0,3 $\mu$m.

Die andere Seite 9 der Polyesterfolie 6 wird zur Oberflächenaktivierung und damit zur Haftverbesserung vorzugsweise elektrisch (z.B. durch Coronavorbehandlung) oder in ähnlicher Weise vorbehandelt. Hierdurch wird eine Haftverbesserung für einen dort aufzubringenden Klebstoff 10 (Haftkleber) zur Polyesterfolie 6 erreicht. Auf die oberflächenaktivierte Seite 9 der Polyesterfolie 6 wird sodann der Klebstoff 10 aufgetragen und dieser Klebstoff 10 wird schließlich mit einem einseitig siliconisierten Aodeckmittel 11 abgedeckt.

Bei dem Abdeckmittel 11 kann es sich um eine Abdeckfolie oder um siliconisiertes Abdeckpapier mit einer Dicke von 50 - 300 $\mu$m handeln. Die bevorzugte Schichtdicke ist ca. 170 $\mu$m.

Der zwischen der Polyesterfolie 6 und dem Abdeckmittel 11 befindliche Klebstoff 10 ist vorzugsweise ein temperaturvernetzender Acrylathaftkleber mit einer Schichtdicke von 5-15 $\mu$m. Die bevorzugte Schichtstärke beträgt ca. 7 - 10 $\mu$m.

Die biaxial gereckte Polyesterfolie 6 besitzt eine Schichtdicke von 20 - 50 $\mu$m und vorzugsweise eine Schichtdicke von ca. 25 $\mu$m.

Gemäß der schematischen Darstellung in Fig. 2 weist die Lackfolie 1 als Lack 4 eine einzige Lackschicht 12 auf. Bei diesem Lack 4 handelt es sich zweckmäßigerweise um einen modifizierten 2-Komponenten-Polyurethanlack. Er kann einfarbig sein oder der Lack 4 ist ein 2-Schicht-Metallic-Lack in Form eines pigmentierten Metallic-Basislackes und eines zusätzlich aufgetragenen Klarlackes (Fig. 3) bzw. ein Mineraleffektlack oder dergleichen. Gemäß der schematischen Darstellung in Fig. 3 weist die Lackfolie 1 daher eine Lackschicht 12 auf und ist zusätzlich noch mit einer Lage Klarlack 13 versehen, bei dem es sich um einen 2-Komponenten-Lack handeln kann.

Wenn der Lack 4 in der Lackschicht 12 ein einfarbiger Lack (Uni-Lack) ist, handelt es sich zweckmäßigerweise um ein mit aliphatischen Isocyanaten vernetztes, hydroxylgruppenhaltiges Polyacrylat.

Aufgrund der erforderlichen Elastizität muß der Lack 4 mit einem Elastifizierungsmittel (z. B. mit einem migrationsfesten Elastifizierungsharz) modifiziert werden. Ferner muß das Bindemittel extrem reaktionsfähig eingestellt werden, was durch Zugabe eines Katalysators erreicht wird. Hierbei muß jedoch die Topfzeit des zu erzielenden Lackes verarbeitungsgerecht sein und es dürfen bei der vorgesehenen Trocknung keine Oberflächenstörungen wie Blasen usw. auftreten.

Um die mit Lack 4 beschichtete Polyesterfolie 6 ohne Oberflächenbeschädigung aufrollen zu können, ist die Zugabe eines speziellen Anti-Block-Mittels auf Basis eines modifizierten Polysiloxans notwendig.

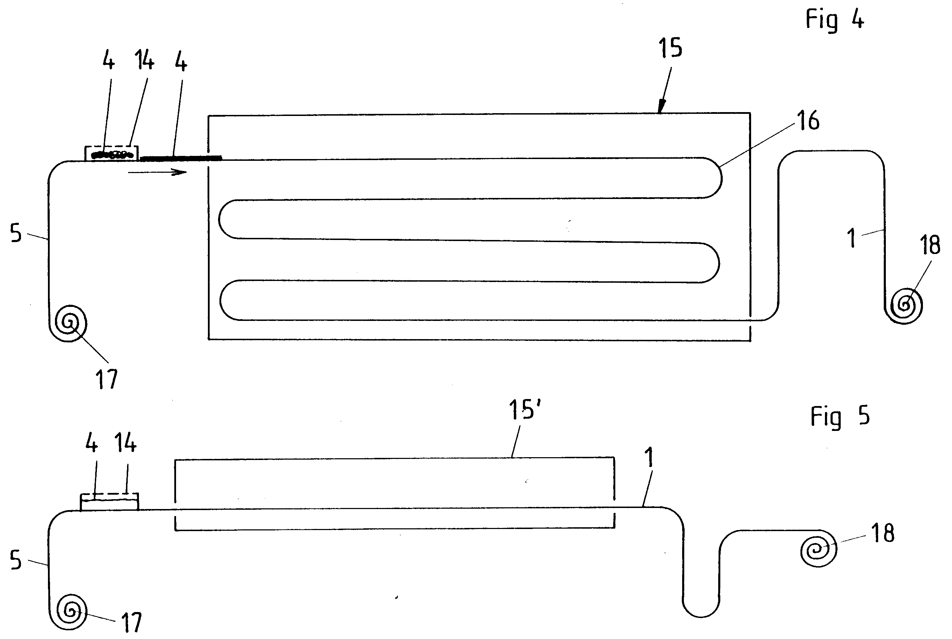

Der verarbeitungsgerecht hergestellte Lack 4 kann mittels Rakeleinrichtung 14 (Fig. 4 und 5) oder mit Hilfe einer Spritzpistole auf die für den besonderen Einsatz als Lackfolie 1 vorbereitete Folie 5 aufgetragen werden. Die Trockenschichtstärke des Lackes 4 beträgt 30 - 90 $\mu$m und vorzugsweise ca. 50 $\mu$m.

Sofern als Lack 4 ein 2-Schicht-Metallic-Lack zum Einsatz gelangt, handelt es sich beim Metallic-Basislack um eine mit Metallic- und Effektmitteln pigmentierte, physikalisch trockene Bindemittelmischung auf der Basis von Polyester/Celluloseacetobutyrat.

Zur Haftverbesserung kann ein geeignetes Weichharz zugesetzt werden.

Das Auftragen des Lackes 4 auf die vorbereitete Polyesterfolie 6 erfolgt - wie bereits oben erwähnt - mit Hilfe einer Rakeleinrichtung 14. Sodann durchläuft die vorbereitete Folie 5 mit der auf ihrer einen Seite angeordneten Lackschicht 12 zum Trocknen eine Heizeinrichtung 15 mit mehreren Wendeschleifen 16 oder sie durchläuft eine Heizeinrichtung 15' gemäß Fig. 5 ohne Wendeschleifen. Die Lufttemperatur in der Heizeinrichtung 15 liegt bei etwa 60° C bis 80° C. Die Luftmenge und die Temperatur der Luft werden auf Bedarf eingestellt. Dies ist grundsätzlich bekannt.

Die gemäß Fig. 1 vorbereitete Tragfolie 5 wird der Rakeleinrichtung 14 von einer Rolle 17 zugeführt und die aus Folie 5 und Lack 4 bestehende Lackfolie 1 wird nach dem Verlassen der Heizeinrichtung 15 bzw. 15' wiederum zu einer Rolle 18 aufgewickelt.

Nach dem Trocknen in der Heizeinrichtung 15 bzw. 15' kann der ebenfalls modifizierte Klarlack 13 nach dem gleichen Verfahren auf die Lackfolie 1 gemäß Fig. 2 aufgebracht werden, so daß dann eine Lackfolie 1' gemäß Fig. 3 vorliegt.

Im Falle der Herstellung eines 2-Schicht-Lackes bzw. eines zusätzlich mit dem Klarlack 13 abgedeckten Metalliclackes

4 beträgt die Trockenschichtstärke für den Basislack zweckmäßigerweise 15 - 50$\mu$m und vorzugsweise ca. 15$\mu$m und für den Klarlack 25 - 100$\mu$m und vozugsweise ca. 30$\mu$m.

Die Zusammensetzung des mit Rakeleinrichtung oder Spritzpistole auftragbaren Lackes ist im Falle des einfarbigen Lackes 4 und / oder des Klarlackes 13 wie folgt.

Der Lack 4 bzw. der Klarlack 13 enthalten

| | |
|---|---|
| Hydroxylgruppenhaltigen Acryl-Stammlack (handelsüblich pigmentiert oder als Klarlack) | 60,7 % |
| Aliphatischen Polyisocyanathärter | 29,6 % |
| Mod. Polyester zur Elastifizierung | 4,5 % |
| Organo-Zinn-Katalysator zur Reaktionsbeschleunigung z. B. Dibutylzinndilaurat oder dergleichen | 4,7 % |
| Polysiloxan als Anti-Block-Mittel z. B. Polysiloxan-Polyätherpolymer | 0,5 % |
| Gew.- | $\overline{100\ \%}$ |

Es versteht sich, daß die oben genannten Substanzen durch gleichwertige ersetzbar sind und daß sich dann die Prozentsätze gegebenenfalls ändern.

Die aus Lack 4 und aus gegebenenfalls Klarlack 13 mit den genannten Merkmalen sowie aus Tragfolie 5 mit den genannten Merkmalen bestehende Lackfolie 1, 1' ist auf unterschiedliche Weise verwendbar. Es ist möglich, die lackfolie tiefzuziehen und dann in einer Form zu hinterspritzen bzw. zu hinterschäumen.

Darüber hinaus ist es möglich, derartige Lackfolien zur Lackierung von Rammschutzleisten bzw. von Stoßfängern zu verwenden. Auch können Zierleisten mit ihrer Hilfe gestaltet werden. Besonders zweckmäßig ist der Einsatz der Lackfolie auf Rollprofilen, Stranpressprofilen, Streckbiegeprofilen und / oder Stanzteilen.

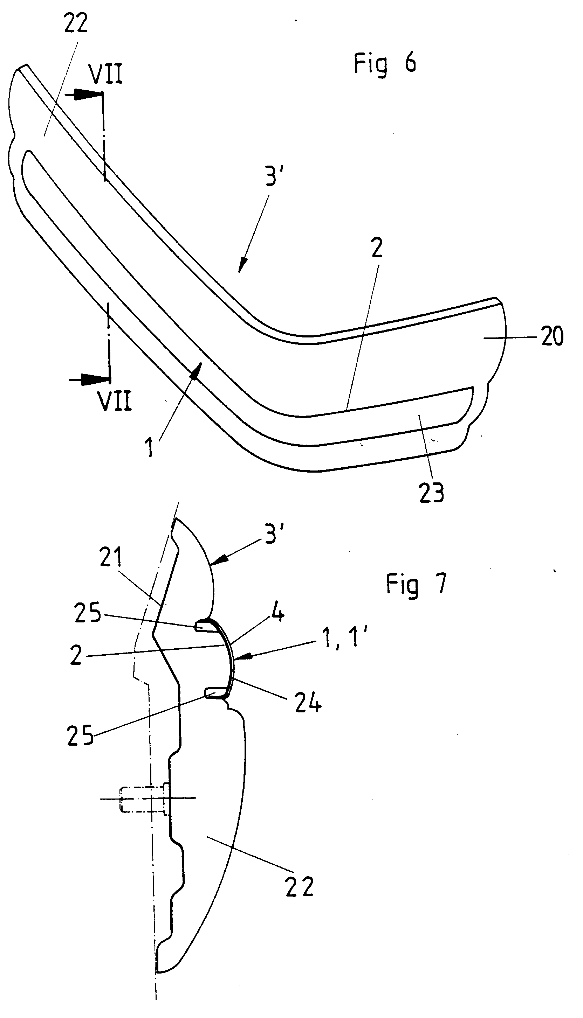

Grundsätzlich ist es auch möglich, komplette Teile-Lackierungen mit Lackfolien 1, 1' durchzuführen, wobei dies mit erheblichen Kosteneinsparungen verbunden ist. Die Fig. 6 - 10 zeigen hierzu verschiedene Ausführungsbeispiele.

Das Teil 3 gemäß den Fig. 6 und 7 ist ein fertiggestelltes, hinteres Seitenteil 3' eine Rammschutzleiste mit einem in den Heckbereich des Fahrzeugs reichenden Endstück 20. Dieses Seitenteil 3' besteht aus einem auch zur Befestigung am Fahrzeug dienenden Träger 21, einem aus Kunststoff bestehendem Körper 22 sowie einem Zierstreifen 23, der mit Hilfe der Lackfolie 1 gebildet wird.

Bei dem in den Fig. 6 und 7 konkret dargestellten Ausführungsbeispiel ist die Lackfolie 1 nicht unmittelbar auf dem Seitenteil 3' angeordnet, sondern es ist zusätzlich zur Erzielung einer zweckmäßigen Befestigung der Lackfolie 1 auf dem Seitenteil 3' noch ein weiterer Träger 24 vorgesehen. Dieser Träger 24 ist schmal und lang und z. B. ein Metallband oder ein metallischer Streifen, auf den zunächst die Lackfolie 1, 1' aufgebracht wird, ehe sodann der Träger 24 mit der Lackfolie 1, 1' an dem Teil 3 bzw. gemäß den Fig. 6 und 7 konkret an dem Seitenteil 3' der Rammschutzleiste befestigt wird. Dies geschieht gemäß der Schnittdarstellung in Fig. 7 zum Beispiel dadurch, daß die Ränder des streifenförmigen Trägers 24 mit Vorspannung in eine Vertiefung bzw. in Nuten 25 eingesetzt werden, die in dem aus Kunststoff bestehenden Körper 22 des Seitenteiles 3' vorgesehen sind. Hiermit läßt sich die auf dem Träger 24 angeordnete Lackfolie 1 sicher und zuverlässig an dem Seitenteil 3' verankern.

Die Befestigung der Lackfolie 1, 1' auf dem Träger 24 erfolgt nach Entfernen des Abdeckmittels 11 mit Hilfe des Klebstoffes 10 / Haftklebers 10 sowie zweckmäßigerweise mit Druck und bei geeigneter Temperatur. Dies ist jeweils auch von der Art des Klebstoffes 10 / Haftklebers 10 abhängig.

Wie die Schnittansicht von Fig. 7 zeigt, bildet die Lackfolie 1, 1' die wirksame Oberfläche der Fläche 2 des Seitenteiles 3' im Bereich zwischen den beiden als Haltenuten dienenden Nuten 25.

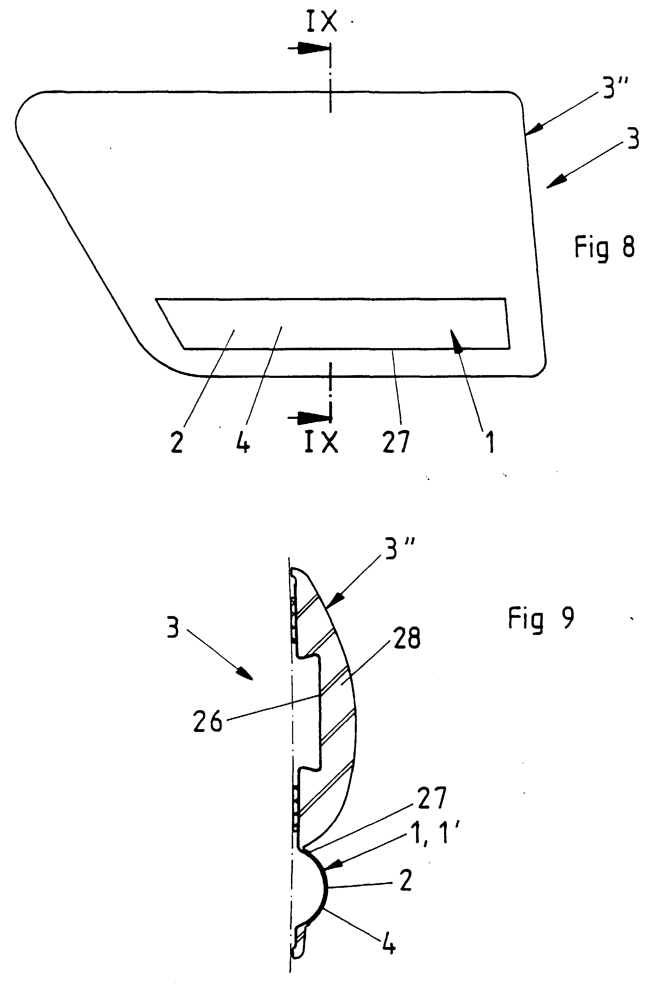

Die beiden Figuren 8 und 9 zeigen ein abgewandeltes Teil 3 bzw. konkret ein fertiggestelltes Teil 3" einer Kotflügel-Zierleiste.

Dieses Teil 3" besteht wiederum aus einem z. B. metallischen Träger 26, auf dem ein aus Kunststoff bestehender, eine Öffnung bzw. ein Fenster 27 aufweisender Körper 28 angeordnet ist. Im Bereich des Fensters 27 ist somit der metallische Träger 26 in dem aus Kunststoff bestehenden Körper 28 frei zugänglich.

Gemäß der Darstellung in den Fig. 8 und 9 wird die Lackfolie 1, 1' im Bereich des Fensters 27 angeordnet und bildet somit dort eine wirksame, lackierte Oberfläche. Dabei erfolgt die Aufbringung der Lackfolie 1, 1' unmittelbar auf dem Träger 26, wozu die Lackfolie 1,1' auf ihrer dem Träger 26 zugewandten Seite mit einem geeigneten Klebstoff 10 gemäß den Fig. 1 - 3 beschichtet ist.

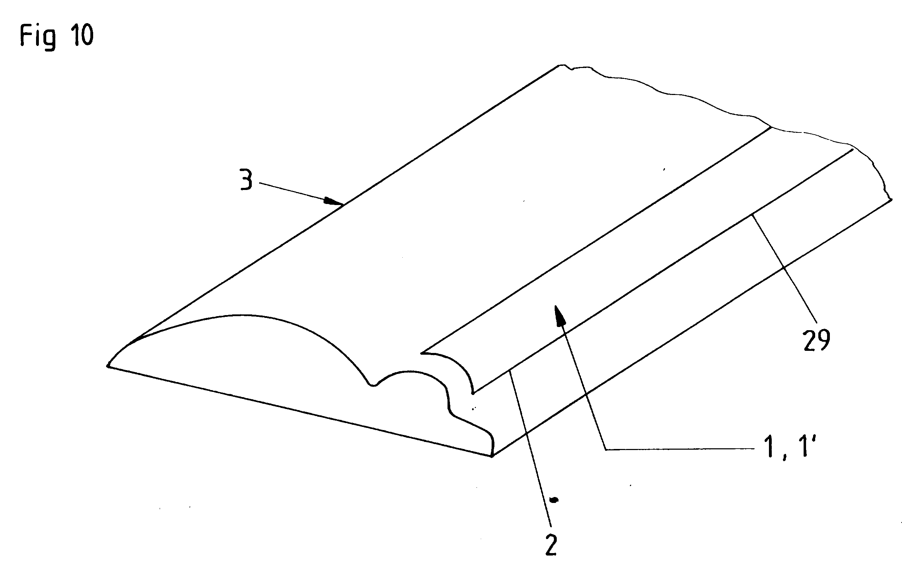

Zur Herstellung des Teiles 3 bzw. 3" gemäß den Fig. 8 und 9 wird zunächst der Träger 26 zum Beispiel durch Rollen hergestellt und vorzugsweise wird die Lackfolie 1,1' im gleichen Arbeitsgang im Bereich des Fensters mit leichtem Druck und bei gering erhöhter Temperatur von 50° - 60° C oder bei Zimmertemperatur unmittelbar auf den Träger 26 aufgebracht. Danach wird der getrennt hergestellte und vorzugsweise aus Kunststoff bestehende und das Fenster 27 aufweisende Körper 28 mit dem Träger 26 verbunden bzw. verklebt. Hierbei können Temperaturen bis 210° C und Drücke bis 10 bar bei einer Verweilzeit bis zu 30 sec. auftreten. Fig. 10 zeigt schließlich eine Ausführungsform, gemäß der eine Lackfolie 1, 1' unmittelbar zur Gestaltung der Fläche 2 auf dem Teil 3 angeordnet ist. Das Teil 3 kann ein beliebiges Teil sein. Notwendige Voraussetzung für die Verwendung der Lackfolie 1, 1' zur Gestaltung der Fläche 2 ist nur, daß der Klebstoff auf der dem Teil 3 zugewandten Seite der Lackfolie 1, 1' die gewünschte Haftverbindung herstellt. Form und Gestalt sowie Größe der Lackfolie 1, 1' können beliebig sein und sind nicht durch das in Fig. 10 dargestellte Ausführungsbeispiel in irgendeiner Form beschränkt. Es versteht sich allerdings, daß es besonders zweckmäßig ist, Lackfolien 1, 1' z. B. als Zierstreifen 29 gemäß Fig. 10 einzusetzen, wobei das Teil 3 aus Kunststoff oder aus einem anderen Werkstoff bestehen kann.

**Patentansprüche**

1. Verfahren zum Herstellen von insbesondere aus Kunststoff bestehenden oder Kunststoff enthaltenden Teilen mit farblich unterschiedlich lackierten Flächen (2), wobei eine Tragfolie (5) als Träger für mindestens eine auf einem Haftvermittler (8) angeordnete Lackschicht (12) verwendet und zusammen mit der Lackschicht (12) auf dem zu lakkierenden Teil (3, 3', 3") angeordnet wird, **dadurch gekennzeichnet**, daß als Tragfolie eine biaxial gereckte Polyesterfolie, eine Aluminiumfolie oder eine aluminiumbedampfte Polyesterfolie verwendet wird.

2. Verfahren nach Anspruch 1, **dadurch gekennzeichnet**, daß die die Lackschicht (12) tragende Tragfolie (5) unmittelbar auf dem zu lackierenden Teil (3) angeordnet wird.

3. Verfahren nach Anspruch 1, **dadurch gekennzeichnet**, daß die die Lackschicht (12) tragende Tragfolie (5) auf einem weiteren Träger (24) angeordnet und zusammen mit dem weiteren Träger (24) auf / an dem zu lackierenden Teil (3,3',3") angeordnet / befestigt wird.

4. Verfahren nach Anspruch 3, **dadurch gekennzeichnet**, daß ein metallischer Träger (24) als weiterer Träger verwendet wird.

5. Verfahren nach einem der Ansprüche 1 bis 4, **dadurch gekennzeichnet**, daß das zu lackierende aus Kunststoff bestehende Teil (3',3") mindestens eine Vertiefung (25) und/oder ein Fenster (27) erhält und daß der metallische Träger (24) mit der die Lackschicht (12) tragenden Tragfolie (5) in die Vertiefung (25) und/oder die Lackfolie (1, 1') in das Fenster (27) eingesetzt und dort befestigt wird.

6. Verfahren nach eine der Ansprüche 1 bis 5, **gekennzeichnet durch** die Verwendung der mit Lack (4) beschichteten Tragfolie (5) zur Lackierung von Zierleisten.

7. Verfahren nach einem der Ansprüche 1 bis 5, **gekennzeichnet durch** die Verwendung der mit Lack (4) beschichteten Tragfolie (5) bei der Rammschutzleistenlackierung.

8. Verfahren nach einem der Ansprüche 1 bis 5, **gekennzeichnet durch** die Verwendung der mit Lack (4) beschichteten Tragfolie (5) bei der Stoßfängerlackierung.

9. Verfahren nach einem der Ansprüche 1 bis 5, **gekennzeichnet durch** die Verwendung der mit Lack (4) beschichteten Tragfolie (5) zur Lackierung kompletter Karosserieteile.

10. Verfahren nach einem der Ansprüche 1 bis 5, **gekennzeichnet durch** die Verwendung der mit Lack (4) beschichteten Tragfolie (5) zur Lackierung von Haushaltsgeräten und / oder von für den Bausektor bestimmten Teile (3).

11. Verfahren nach einem der Ansprüche 1 bis 10, **dadurch gekennzeichnet**, daß die Lackfolie (1, 1') tiefgezogenen und sodann in einer Form hinterspritzt oder hinterschäumt wird.

**12.** Lackfolie bei welcher eine Lackschicht (12) mit Hilfe eines Haftvermittlers (8) auf einer als Träger dienenden Tragfolie (6) angeordnet ist, **dadurch gekennzeichnet**, daß die Tragfolie (6) eine biaxial gereckte Polyesterfolie, eine Aluminiumfolie oder eine aluminiumbedampfte Polyesterfolie ist.

**13.** Lackfolie nach Anspruch 12, **gekennzeichnet durch** den folgenden, aus einzelnen Lagen bestehenden Aufbau:

> a) ein Abdeckmittel (11)
> b) einen Klebstoff (10)
> c) eine als Träger dienende, biaxial gereckte Polyesterfolie
> d) einen Haftvermittler (8) auf Basis eines AcrylPolymers
> e) eine Schicht (12) eines modifizierten 2-Komponenten Polyurethanlackes oder pigmentierten MetallicBasislackes und
> f) einen 2-Komponenten-Klarlack (13).

**14.** Lackfolie nach Anspruch 13, **dadurch gekennzeichnet**, daß das Abdeckmittel (11) ein siliconisiertes Abdeckpapier ist.

**15.** Lackfolie nach Anspruch 13 oder 14, **dadurch gekennzeichnet**, daß der Klebstoff (10) ein temperaturvernetzender Acrylathaftkleber ist.

**16.** Lackfolie nach einem der Ansprüche 12 bis 15, **dadurch gekennzeichnet**, daß die dem Klebstoff (10) und oder die dem Haftvermittler (8) zugewandte Oberfläche der Tragfolie (6) physikalisch/mechanisch oberflächenbehandelt ist.

**17.** Lackfolie nach einem der Ansprüche 12 bis 16, **dadurch gekennzeichnet**, daß der Haftvermittler (8) ein Mittel auf der Basis eines Acryl-Polymers ist.

**18.** Lackfolie nach einem der Ansprüche 13 bis 17, **dadurch gekennzeichnet**, daß das Abdeckmittel ein siliconisiertes Abdeckpapier mit einer Dicke von 50 - 300 µm, vorzugsweise mit eine Schichtdicke von ca. 170 µm ist.

**19.** Lackfolie nach einem der Ansprüche 13 bis 18, **dadurch gekennzeichnet**, daß der Klebstoff (10) eine Schichtdicke von 5 - 15 µm, vorzugsweise eine Schichtdicke von 7 -10 µm aufweist.

**20.** Lackfolie nach einem der Ansprüche 12 bis 19, **dadurch gekennzeichnet**, daß die als Tragfolie dienende Polyesterfolie (6) eine Schichtdicke von 20 - 50 µm, vorzugsweise eine Schichtdicke von ca. 25 µm aufweist.

**21.** Lackfolie nach einem der Ansprüche 12 bis 20, **dadurch gekennzeichnet**, daß der Haftvermittler (8) eine Schichtdicke von 0,2 - 5 µm, vorzugsweise eine Schichtdicke von 0,3 µm aufweist.

**22.** Lackfolie nach einem der Ansprüche 12 bis 21, **dadurch gekennzeichnet**, daß der Lack (4) ein hydroxylgruppenhaltiger Acryl-Lack ist, der aliphatischen Polyisocyanathärter, mod. Polyester zur Elastifizierung, einen Organo-Zinn Katalysator sowie Polysiloxan als Anti-Block-Mittel enthält.

**23.** Lackfolie nach einem der Ansprüche 12 bis 22, **dadurch gekennzeichnet**, daß der Lack (4) aus 60,7 % hydroxylgruppenhaltigem Acryl-Stammlack, 29,6 % aliphatischem Polyisocyanathärter, 4,5 % mod. Polyester, 4,7 % Organo-Zinn Katalysator und 0,5 % Polysiloxan besteht.

**24.** Lackfolie nach einem der Ansprüche 22 oder 23, **dadurch gekennzeichnet**, daß Dibutylzinndilaurat als Organo-Zinn-Katalysator vorgesehen ist.

**25.** Lackfolie nach einem der Ansprüche 22 bis 24, **dadurch gekennzeichnet**, daß Polysiloxan-Polyätherpolymer als Anti-Block Mittel vorgesehen ist.

## Claims

**1.** A process for producing parts, in particular consisting of plastics or containing plastics, having painted areas (2) of different colours, wherein a backing film (5) is used as the support for at least one coat (12) of paint disposed on a coupling agent (8) and is arranged together with the paint coat (12) on the part (3, 3', 3") to be painted, **character-**

**ised in that** a biaxially stretched polyester film, an aluminium film or an aluminised polyester film is used as the backing film.

2. A process according to claim 1, **characterised in that** the backing film (5) carrying the paint coat (12) is arranged directly on the part (3) to be painted.

3. A process according to claim 1, **characterised in that** the backing film (5) carrying the paint coat (12) is arranged on an additional support and is arranged/attached on/to the part (3, 3', 3") to be painted together with the additional support (24).

4. A process according to claim 3, **characterised in that** a metallic support (24) is used as the additional support.

5. A process according to any one of claims 1 to 4, characterised in that the plastics part (3', 3") to be painted comprises at least one recess (25) and/or a window (27) and in that the metallic support (24), with the backing film (5) carrying the paint coat (12), is inserted into the recess (25) and/or the paint film (1, 1') is inserted into the window (27) and attached therein.

6. A process according to any one of claims 1 to 5, **characterised by** use of the backing film (5) coated with paint (4) for painting trim strips.

7. A process according to any one of claims 1 to 5, **characterised by** use of the backing film (5) coated with paint (4) for painting impact protection strips.

8. A process according to any one of claims 1 to 5, **characterised by** use of the backing film (5) coated with paint (4) in the painting of bumpers.

9. A process according to any one of claims 1 to 5, **characterised by** use of the backing film (5) coated with paint (4) for painting whole car body parts.

10. A process according to any one of claims 1 to 5, **characterised by** use of the backing film (5) coated with paint (4) in the painting of domestic appliances and/or parts (3) intended for the building industry.

11. A process according to any one of claims 1 to 10, **characterised in that** the paint film (1, 1') is thermoformed and then provided with injection-moulded or foamed backing in a mould.

12. A paint film, in which a paint coat (12) is disposed with the aid of a coupling agent (8) on a backing film (6) serving as a support, **characterised in that** the backing film (6) is a biaxially stretched polyester film, an aluminium film or an aluminised polyester film.

13. A paint film according to claim 12, **characterised by** the following structure, consisting of individual layers:

 a) a covering agent (11)
 b) an adhesive (10)
 c) a biaxially stretched polyester film acting as a support
 d) a coupling agent (8) based on an acrylic polymer
 e) a coat (12) of a modified 2-component polyurethane paint or pigmented metallic based paint and
 f) a 2-component clear finish (13).

14. A paint film according to claim 13, **characterised in** that the covering agent (11) is a siliconised covering paper.

15. A paint film according to claim 13 or claim 14, **characterised in that** the adhesive (10) is a thermally cross-linking acrylate pressure sensitive adhesive.

16. A paint film according to any one of claims 12 to 15, **characterised in** that the surface of the backing film (6) facing the adhesive (10) and/or the surface of the backing film (6) facing the coupling agent (8) is subjected to physical/mechanical surface treatment.

17. A paint film according to any one of claims 12 to 16, **characterised in** that the coupling agent (8) is based on an acrylic polymer.

**18.** A paint film according to any one of claims 13 to 17, **characterised in** that the covering agent is a siliconised covering paper with a thickness of from 50 - 300 µm, preferably with a layer thickness of approximately 170 µm.

**19.** A paint film according to any one of claims 13 to 18, **characterised in that** the adhesive (10) exhibits a layer thickness of from 5 - 15 µm, preferably a layer thickness of from 7 - 10 µm.

**20.** A paint film according to any one of claims 12 to 19, **characterised in that** the polyester film (6) acting as the backing film exhibits a layer thickness of from 20 - 50 µm, preferably a layer thickness of approximately 25 µm.

**21.** A paint film according to any one of claims 12 to 20, **characterised in that** the coupling agent (8) exhibits a layer thickness of from 0.2 - 5 µm, preferably a layer thickness of 0.3 µm.

**22.** A paint film according to any one of claims 12 to 21, **characterised in that** the paint (4) is a hydroxyl group-containing acrylic paint, which contains aliphatic polyisocyanate hardeners, modified polyester for elasticisation, an organotin catalyst and polysiloxane as an anti-blocking agent.

**23.** A paint film according to any one of claims 12 to 22, **characterised in that** the paint (4) consists of 60.7 % hydroxyl group-containing acrylic stock paint, 29.6 % aliphatic polyisocyanate hardener, 4.5 % modified polyester, 4.7 % organotin catalyst and 0.5 % polysiloxane.

**24.** A paint film according to either one of claims 22 or 23, **characterised in that** dibutyltin dilaurate is provided as the organotin catalyst.

**25.** A paint film according to any one of claims 22 to 24, **characterised in that** polysiloxane polyether polymer is provided as the anti-blocking agent.

**Revendications**

**1.** Procédé pour préparer des pièces, particulièrement composées de matière synthétique ou renfermant une matière synthétique, présentant des surfaces laquées de différentes couleurs (2), dans lequel une feuille de support (5) est utilisée en tant que support d'au moins une couche de laque (12) disposée sur un agent adhésif (8) et disposée avec la couche de laque (12) sur la pièce à laquer (3,3',3"), **caractérisé en ce qu**'une feuille de polyester étirée dans les deux directions, une feuille d'aluminium ou une feuille de polyester avec aluminiage est utilisée en tant que feuille de support.

**2.** Procédé selon la revendication 1, **caractérisé en ce que** la feuille de support (5) portant la couche de laque (12) est directement disposée sur la pièce (3) à laquer.

**3.** Procédé selon la revendication 1, **caractérisé en ce que** la feuille de support (5) portant la couche de laque (12) est disposée sur un autre support (24) et disposée/fixée avec l'autre support (24) sur/contre la pièce (3,3',3") à laquer.

**4.** Procédé selon la revendication 3, **caractérisé en ce qu**'un support métallique (24) est utilisé en tant qu'autre support.

**5.** Procédé selon l'une des revendications 1 à 4, **caractérisé en ce que** la pièce (3',3") à laquer, composée d'une matière synthétique comporte au moins un creux (25) et/ou une fenêtre (27) et en ce que le support métallique (24) avec la feuille de support (5) portant la couche de laque (12) est inséré et fixé dans le creux (25) et/ou la feuille de laque (1,1') est insérée et fixée dans la fenêtre (27).

**6.** Procédé selon l'une des revendications 1 à 5, **caractérisé par** l'utilisation de la feuille de support (5) recouverte de laque (4) pour laquer des baguettes décoratives.

**7.** Procédé selon l'une des revendications 1 à 5, **caractérisé par** l'utilisation de la feuille de support (5) recouverte de laque (4) pour laquer des bandes de protection anti-choc.

8. Procédé selon l'une des revendications 1 à 5, **caractérisé par** l'utilisation de la feuille de support (5) recouverte de laque (4) pour laquer des pare-chocs.

9. Procédé selon l'une des revendications 1 à 5, **caractérisé par** l'utilisation de la feuille de support (5) recouverte de laque (4) pour laquer des pièces de carrosserie complètes.

10. Procédé selon l'une des revendications 1 à 5, **caractérisé par** l'utilisation de la feuille de support (5) recouverte de laque (4) pour laquer des appareils ménagers et/ou des pièces (3) particulières utilisées dans le secteur du bâtiment.

11. Procédé selon l'une des revendications 1 à 10, **caractérisé en ce que** la feuille de laque (1,1') est emboutie, suite à quoi on procède à une pulvérisation ou à un moussage ultérieur dans un moule.

12. Feuille de laque dans laquelle une couche de laque (12) est disposée sur une feuille de support (6) servant de support au moyen d'un agent adhésif (8), **caractérisée en ce que** la feuille de support (6) est une feuille de polyester étirée dans les deux directions, une feuille d'aluminium ou une feuille de polyester avec aluminiage.

13. Feuille de laque selon la revendication 12, **caractérisée par** la conception suivante, composée de différentes couches :

   a) un moyen de recouvrement (11)
   b) un adhésif (10)
   c) une feuille de polyester s'étendant dans les deux directions et servant de support
   d) un agent adhésif (8) à base d'un polymère acrylique
   e) une couche (12) d'une laque de polyuréthanne à deux composants modifiée ou d'une laque de base métallique pigmentée et
   f) une laque claire (13) à deux composants.

14. Feuille de laque selon la revendication 13, **caractérisée en ce que** le moyen de recouvrement (11) est un papier de recouvrement traité au silicone.

15. Feuille de laque selon la revendication 13 ou 14, **caractérisée en ce que** l'adhésif (10) est une substance autoadhésive d'acrylate thermoréticulante.

16. Feuille de laque selon l'une des revendications 12 à 15, **caractérisée en ce que** la surface de la feuille de support (6) dirigée vers l'adhésif (10) et/ou l'agent adhésif (8) a subi un traitement de surface de façon mécanique/physique.

17. Feuille de laque selon l'une des revendications 12 à 16, **caractérisée en ce que** l'agent adhésif (8) est un agent à base d'un polymère acrylique.

18. Feuille de laque selon l'une des revendications 13 à 17, **caractérisée en ce que** l'agent de recouvrement est un papier de recouvrement traité au silicone présentant une épaisseur comprise entre 50 et 300 $\mu$m, de préférence une épaisseur de couche égale à environ 170 $\mu$m.

19. Feuille de laque selon l'une des revendications 13 à 18, **caractérisée en ce que** l'adhésif (10) présente une épaisseur de couche comprise entre 5 et 15 $\mu$m, de préférence une épaisseur de couche comprise entre 7 et 10 $\mu$m.

20. Feuille de laque selon l'une des revendications 12 à 19, **caractérisée en ce que** la feuille de polyester (6) servant de feuille de support présente une épaisseur de couche comprise entre 20 et 50 $\mu$m, de préférence une épaisseur de couche environ égale à 25 $\mu$m.

21. Feuille de laque selon l'une des revendications 12 à 20, **caractérisée en ce que** l'agent adhésif (8) présente une épaisseur de couche comprise entre 0,2 et 5 $\mu$m, de préférence une épaisseur de couche environ égale à 0,3 $\mu$m.

22. Feuille de laque selon l'une des revendications 12 à 21, **caractérisée en ce que** la laque (4) est une laque acrylique contenant des groupes hydroxyles, qui contient un durcisseur sous forme d'un polyisocyanate aliphatique, du polyester modifié pour l'élastification, un catalyseur d'organo-étain, ainsi que du polysiloxane en tant qu'agent anti-bloc.

23. Feuille de laque selon l'une des revendications 12 à 22, **caractérisée en ce que** la laque (4) se compose de 60,7 % de laque acrylique de base contenant des groupes hydroxyles, de 29,6 % de durcisseur de polyisocyanate aliphatique, de 4,5 % de polyester modifié, de 4,7 % de catalyseur d'organo-étain et de 0,5 % de polysiloxane.

24. Feuille de laque selon l'une des revendications 22 ou 23, **caractérisée en ce que** du dilaurate de dibutylétain est prévu en tant que catalyseur d'organo-étain.

25. Feuille de laque selon l'une des revendications 22 à 24, **caractérisée en ce qu'**un polymère de polysiloxane-polyéther est prévu en tant qu'agent anti-bloc.

Fig 1

Fig 2

Fig 3

Fig 4

4  14  4

15

16

5

1

18

17

EP 0 630 763 B1

Fig 5

15'

4  14

1

5

18

17

Fig 6

Fig 7

Fig 8

Fig 9

Fig 10

EP 0 630 763 B1